Europäisches Patentamt

European Patent Office

Office européen des brevets

(11) Publication number: **0 406 854 A2**

# EUROPEAN PATENT APPLICATION

(21) Application number: 90112847.0

(22) Date of filing: 05.07.90

(51) Int. Cl.5: **C08F 20/32**, C08F 20/28, C09D 157/10

(30) Priority: 07.07.89 US 376735

(43) Date of publication of application:
09.01.91 Bulletin 91/02

(84) Designated Contracting States:
AT BE DE DK ES FR GB IT NL SE

(71) Applicant: PPG INDUSTRIES, INC.
One PPG Place
Pittsburgh Pennsylvania 15272(US)

(72) Inventor: Martz, Jonathan Thomas
2509 Hamilton Avenue
Glenshaw, Pa. 15116(US)
Inventor: Kania, Charles Martin
1024 Woodland Place
Natrona Heights, Pa. 10565(US)
Inventor: Das, Suryya Kumar
100 Chapel Knoll Drive
Pittsburgh, Pa. 15238(US)

(74) Representative: Sternagel, Hans-Günther, Dr.
et al
Patentanwälte Dr. Michael Hann Dr. H.-G.
Sternagel Sander Aue 30
D-5060 Bergisch Gladbach 2(DE)

(54) Polymers for high gloss coatings.

(57) Disclosed is a resinous composition comprising: a polymer product prepared by reacting a saturated monocarboxylic acid, a polymerizable ethylenically unsaturated epoxy-functional monomer, optionally a copolymerizable hydroxyl-functional vinyl monomer, and optionally at least one other copolymerizable ethylenically unsaturated monomer. Preparation of the polymer product in part involves reaction of carboxyl functionality from the saturated monocarboxylic acid with epoxy functionality from ethylenically unsaturated epoxy-functional monomer.

Also disclosed is a coating composition containing as binder the polymer product.

Additionally disclosed is a "color plus clear" method of coating utilizing the polymer product.

EP 0 406 854 A2

## POLYMERS FOR HIGH GLOSS COATINGS

### Background of the Invention

The present invention is directed to resinous compositions containing hydroxyl-functional polymers having beta-hydroxyl functionality produced from components comprising saturated monocarboxylic acids and unsaturated epoxy-functional monomers, more particularly to such resinous compositions containing such polymers produced from components additionally comprising a hydroxy-functional vinyl monomer.

Coating compositions based on hydroxyl-functional acrylic polymers cured with co-reactive agents such as polyisocyanate curing agents are well known in the art. Such compositions can be considered broadly to be of the thermosetting type in the sense that while heat may not necessarily be applied to promote cure, the compositions form crosslinked structures upon reaction of hydroxyl groups with reactive groups of the curing agent such as isocyanato groups from polyisocyanate.

While such art known coating compositions can provide good film properties at reasonably high total solids contents when utilized, for example, in automotive coatings applications, they often do not provide the excellent properties provided by older, lacquer type coating compositions which are not favored in use today as previously because of their lower solids contents (or conversely higher organic solvent contents) at the time of application of the coating to the substrate. Additionally, such art known compositions often tend not to be as compatible as desired with various pigments which tends to disadvantageously affect appearance properties such as gloss and distinctness of image (DOI) in cured films prepared from such compositions.

It would be desirable to provide hydroxyl-functional, thermosetting (or crosslinking) polymers that can be pigmented and cured to durable, automotive quality finishes having very high gloss and DOI and which do not require a high degree of buffing to achieve such excellent appearance properties.

The present invention is directed to achieving these and other objects which will become apparent to the reader infra.

United States Patent No. 4,818,796 to Das et al is directed to hydroxyl-containing polymers prepared by heating in the presence of a free radical initiator (A) a polymerizable alpha,beta-ethylenically unsaturated carboxylic acid group-containing monomer and (B) an epoxy compound containing at least 5 carbon atoms which is not polymerizable with (A). It is disclosed that such hydroxyl-containing polymers can be cured with agents, such as aminoplasts and polyisocyanates, which are reactive with active hydrogen-containing materials. Disclosed methods of preparation of the polymers of the patent allow for simultaneous polymerization and esterification as well as pre-esterification followed by polymerization. While the preparation of such polymers according to the patent provides for useful products, a wide range of epoxy compounds required for preparation of the products according to the patent are not readily available. Moreover, because of the choice of reactants as described, preparation of a product according to the patent via the route of polymerizing the unsaturated acid first followed by post-esterification with the non-polymerizable saturated epoxy compounds is difficult because of the relative insolubility of the first polymerized product in organic solvents. Moreover, the methods of preparation at high temperature of the products of the patent containing both hydroxyl and carboxyl groups can lead to both intramolecular and intermolecular esterification reactions which tend to be undesirable.

The present invention allows for much more latitude in the choice of reactants and methods of preparation to obtain products useful, for example, when combined with curing agents reactive with active-hydrogens in the present reaction product, for forming thermosetting compositions which provide cured films having a very high degree of gloss and DOI. Moreover, intermolecular hydroxyl/carboxyl reactions are less likely to occur in the preparation of the products of the present invention, and therefore it is believed that the present invention tends to result in products having less internal structure resulting from such undesirable esterification reactions.

### Summary of the Invention

The present invention provides a resinous composition comprising: a polymer product prepared by reacting a saturated monocarboxylic acid, a polymerizable ethylenically unsaturated epoxy-functional monomer, optionally a copolymerizable hydroxyl-functional vinyl monomer, and optionally at least one other copolymerizable ethylenically unsaturated monomer. Preparation of a polymer product of the invention is designed to achieve reaction of carboxyl functionality from the saturated monocarboxylic acid with epoxy functionality from the ethylenically unsaturated epoxy-functional monomer. The utilization of ethylenically unsaturated carboxylic acids, e.g., acrylic acid and methacrylic acid, is minimized or avoided so as to prevent undesirable side reactions. Thus the polymer products of the present invention preferably are prepared without the use of ethylenically unsaturated carboxylic acids.

The present invention also provides for a coating composition containing as binder a polymer product of the invention.

The present invention additionally provides for a method of coating a substrate comprising the steps of: (A) coating the substrate with one or more applications of a pigmented basecoating composition containing a film-forming resin to form a basecoat; and (B) coating the basecoat with one or more applications of a topcoating composition containing (a) a polymer product of the invention, (b) a curing agent reactive with hydroxyl functionality of the polymer product, and (c) optionally a cure promoting catalyst.


## Detailed Description of the Invention


A polymer product of the invention is prepared by reacting in the presence of a polymerization initiator, preferably a free radical initiator, components comprising (1) from 1.0 to 70 percent, preferably from 10 to 40 percent, by weight of a saturated monocarboxylic acid, (2) from 1.0 to 50 percent, preferably from 5.0 to 25 percent, by weight of a polymerizable ethylenically unsaturated epoxy-functional monomer, (3) from 0 to 40 percent, preferably from 10 to 40 percent, by weight of a copolymerizable hydroxyl-functional vinyl monomer, and (4) from 0 to 60 percent, preferably from 20 to 50 percent, by weight of a copolymerizable ethylenically unsaturated monomer different from said components (2) and (3). The aforesaid percentages are based on the total weight of the reactive components. Epoxy functionality from the ethylenically unsaturated epoxy-functional monomer is reacted with carboxyl functionality from the saturated monocarboxylic acid during preparation of the polymer product of the invention. The resinous composition of the invention generally comprises (A) from 20 to 100 percent by weight of the polymer product and (B) from 80 to 0 percent by weight of a compatible inert organic solvent and/or diluent.

Examples of saturated monocarboxylic acids for component (1) for preparing the polymer product of the invention include: pentanoic acid, isostearic acid, neodecanoic acid, isodecanoic acid, nonanoic acid, neoheptanoic acid, cyclohexane carboxylic acid, benzoic acid, toluic acid and the mixture of aliphatic monocarboxylic acids available as ECR-903 from EXXON Chemical Company U.S.A. The monocarboxylic acid may be aliphatic or aromatic although aliphatic acids are preferred. Usually, saturated monocarboxylic acids which are non-crystalline at room temperature are utilized and are preferred. Typically, monocarboxylic acids containing from 6 to 18 to carbon atoms are employed, particularly those having branched chain structures. As used herein the term "saturated" in the phrase "saturated monocarboxylic acid" is intended to denote the absence of ethylenic unsaturation but is not intended to exclude aromatic unsaturation as found, for example, in a benzene ring such as in benzoic acid.

Examples of polymerizable ethylenically unsaturated epoxy-functional monomers for component (2) for preparing a polymer product of the invention include: glycidyl acrylate, glycidyl methacrylate, allyl glycidyl ether, methallyl glycidyl ether, 1:1 (molar) adducts of ethylenically unsaturated monoisocyanates such as meta-isopropenyl-alpha,alpha-dimethylbenzyl isocyanate with hydroxyl-functional monoepoxides such as glycidol, and glycidyl esters of polymerizable polycarboxylic acids such as maleic acid, fumaric acid, and crotonic acid. Preferred are the epoxy-functional acrylates such as glycidyl acrylate, epoxy-functional methacrylates such as glycidyl methacrylate, or mixtures thereof, glycidyl methacrylate being particularly preferred.

Examples of copolymerizable hydroxyl-functional vinyl monomers for component (3) for preparing a polymer product of the invention include: hydroxyl-functional acrylates and methacrylates,such as hydroxyethyl acrylate, hydroxyethyl methacrylate, hydroxypropyl acrylate, hydroxypropyl methacrylate, hydroxybutyl acrylate, and butanediol monoacrylate; hydroxyl-functional vinyl ethers such as hydroxybutylvinyl ether; and other hydroxyl-functional vinyl monomers such as, for example, the adduct of 1 mole of epsilon-caprolactone with 1 mole of hydroxyethyl acrylate. Typically a copolymerizable hydroxyl-functional vinyl monomer is employed in the preparation of a polymer product of the invention, particularly where it is desired to provide primary hydroxyl groups to enhance the cure of polymer products of the invention intended for cure via reaction with hydroxyl-reactive curing agents such as organic polyisocyanates,

3

polyanhydrides and aminoplasts such as melamine-formaldehyde resins.

Examples of other copolymerizable ethylenically unsaturated monomers, different from said components (2) and (3), for component (4) for preparing a polymer product of the invention include: the alkyl acrylates, such as methyl acrylate, ethyl acrylate, butyl acrylate, propyl acrylate, 2-ethylhexyl acrylate and isobornyl acrylate; the alkyl methacrylates, such as methyl methacrylate, butyl methacrylate, 2-ethylhexyl methacrylate, decyl methacrylate, lauryl methacrylate and isobornyl methacrylate; N-alkoxymethyl acrylamides and methacrylamides such as N-butoxymethyl acrylamide, N-butoxymethyl methacrylamide, N-ethoxymethyl acrylamide and N-ethoxymethyl methacrylamide; unsaturated nitriles, such as acrylonitrile, methacrylonitrile and ethacrylonitrile; vinyl aromatic hydrocarbons (optionally substituted, for example, by halo atoms) such as styrene, alpha-methyl styrene, alpha-chloromethyl styrene and vinyl toluene; and vinyl aliphatic hydrocarbons (optionally substituted, for example, by halo atoms) such as vinyl acetate and vinyl chloride. Typically, at least one of these other copolymerizable ethylenically unsaturated monomers is utilized to prepare a polymer product of the invention.

Preparation of a polymer product of the invention is designed to promote the esterification reaction between carboxyl functionality of the saturated monocarboxylic acid and epoxy functionality from the ethylenically unsaturated epoxy-functional monomer thereby resulting in beta-hydroxyl groups being formed in the polymer product. This can be achieved in several ways, for example: (1) the saturated monocarboxylic acid and unsaturated epoxy-functional monomer can be pre-esterified prior to polymerization and the resultant reaction product addition polymerized, for example, by free radical initiated polymerization techniques; (2) the unsaturated epoxy-functional monomer can be addition polymerized, typically along with one or more hydroxyl-functional vinyl monomers and/or one or more other copolymerizable ethylenically unsaturated monomers (component 4 described above), in the presence of the saturated monocarboxylic acid under conditions which promote the carboxyl/epoxy esterification reaction; and (3) the unsaturated epoxy-functional monomer can be addition polymerized, typically along with one or more hydroxyl-functional vinyl monomers and/or one or more other copolymerizable ethylenically unsaturated monomers (component 4 described above) to form a polymeric product having epoxy functionality which polymeric product can subsequently be esterified by reaction with the saturated monocarboxylic acid.

The polymerization and esterification reactions generally are conducted at from $80^{\circ}C$ to $170^{\circ}C$, preferably from $120^{\circ}C$ to $145^{\circ}C$. For pre-esterification of the saturated monocarboxylic acid and unsaturated epoxy-functional monomer followed by reaction of the resulting adduct with other ethylenically unsaturated monomers, it may be desirable to avoid temperatures in excess of about $120^{\circ}C$ so as to minimize or avoid premature polymerization of the unsaturated epoxy-functional monomer. Moreover, when pre-esterification is conducted, it is usually done so in the presence of catalyst for promoting the epoxy/acid reaction such as tertiary amine, phosphine or tin catalyst. Also for pre-esterification, a free radical inhibitor may be used to inhibit polymerization.

It is preferred to conduct the polymerization and esterification reactions simultaneously since this involves one step instead of two. In conducting simultaneous esterification and polymerization, the temperature should be high enough to insure that the polymerization and esterification are occurring at about the same rate. Where desired, an esterification catalyst such as tertiary amine, phosphine or tin catalyst may be utilized. However, such catalyst is not necessary if the reaction temperature is high enough, for example, greater than $130^{\circ}C$. In conducting the reaction, the reactive ingredients are heated, typically in the presence of a free radical initiator and optionally a chain transfer agent, in an organic solvent in which the ingredients as well as the resultant polymer product are compatible. Typically, the saturated monocarboxylic acid along with organic solvent is charged to a reaction vessel and heated to reflux, optionally under an inert atmosphere. The ethylenically unsaturated epoxy-functional monomer and optionally hydroxyl-functional vinyl monomer(s) and/or other copolymerizable ethylenically unsaturated monomer(s) and free radical initiator are added slowly to the refluxing reaction mixture. After the addition is complete, some additional free radical initiator may be added and the reaction mixture held at elevated temperature to complete the reaction.

Examples of organic solvents which may be used for the preparation of the polymer product include: aromatic hydrocarbons such as xylene, toluene, and naptha; ketones such as methyl ethyl ketone, methyl amyl ketone, methyl n-butyl ketone, and methyl isobutyl ketone: esters such as butyl acetate, hexyl acetate and heptyl acetate; glycol ethers and glycol esters such as ethylene glycol monoethyl ether, ethylene glycol monobutyl ether, propylene glycol monomethyl ether, propylene glycol monoethyl ether, dipropylene glycol monoethyl ether, propylene glycol monoethyl ether acetate and isobutyl isobutyrate. Alcohols such as lower alkanols and simple glycols, for example, ethanol, propanol, isopropanol, butanol, ethylene glycol and propylene glycol may be used as solvent where desired, but typically are not preferred herein, especially where the polymer product of the invention is intended for use in a composition in combination with a polyisocyanate or polyanhydride curing agent.

Typically, a free radical initiator is used for the polymerization reaction. Examples of free radical initiators are those vinyl polymerization initiators which are soluble in the polymerization medium. Examples of free radical initiators include: azo compounds such as, alpha alpha'-azobis(isobutyronitrile), azobis-(alpha,gamma-dimethyl valeronitrile), and 2,2'-azobis(methylbutyronitrile); peroxides such as benzoyl peroxide, ditertiarybutyl peroxide, and cumene hydroperoxide; and tertiary butyl peracetate, isopropyl percarbonate, butyl isopropyl peroxy carbonate and similar compounds. Of the examples of free radical initiators described herein, the azo compounds are preferred. The quantity of initiator employed can be varied considerably; however, in most instances, it is desirable to utilize from about 0.1 to about 10 percent by weight based on the weight of polymerizable monomer solids.

A chain modifying agent or chain transfer agent may be added to the polymerization mixture to control molecular weight of the polymerization product. The alkylmercaptans, such as dodecyl mercaptan, tertiary dodecyl mercaptan, octyl mercaptan, and hexyl mercaptan may be used for this purpose as well as other chain transfer agents such as alpha-methylstyrene dimer, cyclopentadiene, allyl acetate, allyl carbamate, and mercaptoethanol. When used, these materials are present in amounts of up to 5 percent by weight based on weight of polymerizable ethylenically unsaturated monomers.

Generally a polymer product of the invention has a peak molecular weight as determined by gel permeation chromatography (GPC) utilizing a polystyrene standard of from 3,000 to 50,000, preferably of from 4,000 to 15,000. The lower molecular weight products are particularly useful in high solids coating compositions, i.e., compositions containing at least 50 percent by weight total solids and usually from about 50 to 75 percent by weight, the solids being determined by heating at 110°C for 60 minutes.

Hydroxyl values for polymer products of the present invention may vary widely, but generally range from 50 to 250, typically from 100 to 200, and for preferred embodiments from 145 to 175 (at 100 percent by weight polymer solids).

Polymer products of the invention are particularly useful for forming curable or thermosetting compositions. For this purpose, the polymer products of the invention are combined with a curing agent which is reactive with the active hydrogens (particularly from hydroxyl groups) in the polymer. The preferred curing agents are organic polyisocyanates or polyanhydrides.

Polyisocyanates which may be used as curing agents include: aliphatic or alicyclic polyisocyanates such as hexamethylene diisocyanate and dicyclohexylmethane diisocyanate; aromatic polyisocyanates such as 2,4- and 2,6-toluene diisocyanate and mixtures thereof, and diphenylmethane-4,4'-diisocyanate; arylalkyl polyisocyanates such as ortho-, meta- and para-xylylene diisocyanate; isophorone diisocyanate; polyurethane polyisocyanates obtained from reacting polyisocyanates such as those mentioned above with polyhydroxy compounds such as ethylene glycol and trimethylolpropane. Polyisocyanates containing isocyanurate, allophanate or biuret groups can also be used.

When polyisocyanates are used as curing agents in compositions containing polymer products of the invention, an effective amount of a catalyst for promoting cure between hydroxyl groups of the polymer product and isocyanato groups of the polyisocyanate may be incorporated. Examples of such catalysts include: tertiary amines such as triethylamine or 1,4-diazobicyclo-(2:2:2)octane, and organotin compounds such as stannous octoate and dibutyltin dilaurate.

Examples of polyanhydrides which may be used as curing agents for polymer products of the invention include: carboxylic acid anhydrides which may be monomeric, oligomeric, or polymeric. Specific examples of carboxylic acid anhydrides include: isoprene disuccinyl anhydride and pyromellitic anhydride. Other specific examples of polyanhydrides include polymers containing anhydride groups derived, for example, by reaction of ethylenically unsaturated carboxylic acid anhydrides, such as maleic anhydride, citraconic anhydride and itaconic anhydride with for example, vinyl monomers and/or acrylic monomers. For example carboxylic acid anhydride components may be derived from a mixture of monomers comprising an ethylenically unsaturated carboxylic acid anhydride and at least one vinyl comonomer such as styrene, alpha-methylstyrene, vinyl toluene, vinyl acetate and vinyl chloride. Acrylic monomers refer to compounds such as acrylic acid and methacrylic acid and their ester derivatives, acrylamide and methacrylamide, and unsaturated nitriles such as acrylonitrile and methacrylonitrile. Examples of acrylic monomers include: ·hydroxyethyl (meth)acrylate, hydroxypropyl (meth)acrylate, methyl (meth)acrylate, ethyl (meth)acrylate, propyl (meth)acrylate, isopropyl (meth)acrylate, butyl (meth)acrylate, t-butyl (meth)acrylate, 2-ethylhexyl (meth)acrylate, n-hexyl (meth)acrylate, cyclohexyl (meth)acrylate, 3,3,5- trimethylcyclohexyl (meth)acrylate, decyl (meth)acrylate, isodecyl (meth)acrylate, lauryl (meth)acrylate, stearyl (meth)acrylate, phenyl (meth)-acrylate, and isobornyl (meth)acrylate.

Additional examples of carboxylic acid anhydrides include: anhydride adducts of diene polymers such as maleinized polybutadiene or maleinized copolymers of butadiene, for example butadiene/styrene copolymers; as well as anhydride adducts of unsaturated fatty acid esters, for example, styrene/allyl alcohol copolymers esterified with unsaturated fatty acids and maleinized.

When polyanhydrides are used as curing agents in compositions containing polymer products of the invention, an effective amount of a catalyst for promoting cure between hydroxyl groups of the polymer product and anhydride groups of the polyanhydride may be incorporated. Examples of such catalysts include: amines, typically tertiary amines such as, for example, dimethyl cocoamine, triethylamine, triethanolamine as well as phenolic compounds containing dialkyl-amino groups. Where an amino-functional ethylenically unsaturated monomer is used in the preparation of the polymer product of the invention, the amino group thereby incorporated in the polymer product can serve as an "internal" cure promoting catalyst in compositions containing polyanhydride curing agents. Examples of such amino-functional ethylenically unsaturated monomers include: dimethylaminoethyl acrylate, diethylaminoethyl acrylate, dimethylaminoethyl methacrylate, diethylaminoethyl methacrylate tertiary-butylaminoethyl methacrylate and dimethylaminopropyl methacrylamide.

Other curing agents which are reactive with active hydrogens in polymer products of the invention include: aminoplast resins which are aldehyde condensation products of amines or amides with aldehydes. Examples of suitable amines or amides are melamine, benzoguanamine, urea and similar compounds. Generally, the aldehyde employed is formaldehyde, although products can be made from other aldehydes such as acetaldehyde and furfuryl. Condensation products contain methylol groups or similar alkylol groups depending upon the particular aldehyde employed. If desired, these methylol groups can be etherified by reaction with an alcohol. Various alcohols are employed and generally include any monohydric alcohol, although the preferred alcohol contains from 1 to 4 carbon atoms such as methanol, ethanol, isopropanol and n-butanol. Aminoplasts are commercially available from the American Cyanamid company under the trademark CYMEL and from the Monsanto Chemical Company under the trademark RESIMINE.

Such curable (crosslinkable) or thermosetting compositions are particularly useful as coating compositions. For coatings use, the composition can be formulated as a clear coat or optionally it can contain a pigment. The pigments may be any of the conventional types comprising, for example, iron oxides, lead oxides, strontium chromate, carbon black, coal dust, titanium dioxide, talc, barium sulfate, as well as the color pigments such as cadmium yellow, cadmium red, chromium yellow, phthalocyanine blue, toluidine red, and the metallic pigments such as aluminum flake and metal oxide encapsulated mica. When used, the pigment content of the coating composition is expressed as a pigment to resin weight ratio, and is usually within the range of about 0.05 to 3.0:1. It has been found that pigmented coating compositions of the invention exhibit an excellent degree of heat stability as evidenced by the substantial lack of color drift of such compositions upon heat aging, for example at 120° F (48.9° C) for seven days.

In addition, other optional ingredients such as adjuvant hydroxy-containing polymers, fillers, plasticizers, catalysts, reactive diluents, anti-oxidants, ultraviolet light absorbers, flow control agents, and other formulating additives can be employed if desired.

A coating composition of the invention contains, as binder, a polymer product of the invention. The amount of polymer product and curing agent in a composition of the invention may vary. Typically, however, the polymer product and curing agent are in amounts by weight, based on their combined weight in solids, of from 40 to 75 percent, preferably from 60 to 70 percent, and from 60 to 25 percent, preferably from 40 to 30 percent, respectively.

In a typical embodiment of a pigmented coating composition of the invention, the composition contains from 20 to 80 percent, preferably from 40 to 60 percent, by weight solids of the polymer product, up to 50 percent by weight of pigment and from 80 to 20 percent, preferably from 60 to 40 percent, by weight of solvent and/or diluent based on the total weight of said coating composition.

Coating compositions of the invention can be applied to a variety of substrates such as wood, metal, glass, cloth, plastic, foams and the like by a variety of application techniques such as air spraying, airless spraying, dipping, brushing and flow coating. Usually, the coating composition will be applied by spraying. The coating compositions are particularly desirable as topcoat compositions for automobiles and trucks either as original finishes or as refinish coatings.

The hydroxyl-functional, thermosetting (or cross linking) polymer products of the invention can be cured to durable, automotive quality finishes having very high gloss and DOI and which do not require a high degree of buffing to achieve such excellent appearance properties.

It has been found that coating compositions of the invention are useful in a coating system known as "color plus clear" which has become popular in the automotive industry. In this system the substrate is coated with one or more applications of a pigmented basecoating composition to form a basecoat which thereafter is coated with one or more applications of an essentially clear topcoating composition to form a topcoat. Coating compositions of the invention may be utilized for either, or both, of the pigmented basecoating composition and clear topcoating composition. Coating compositions of the invention have been found, for example, to be particularly useful as clear topcoating compositions.

The topcoating composition may be applied to the basecoat either before or after drying or curing the basecoat. Accordingly, the present invention also provides a method of coating comprising the steps of: (A) coating a substrate with one or more applications of a pigmented basecoating composition containing a film-forming resin (either the same or different from a polymer product of the invention) to form a basecoat; and thereafter (B) coating the basecoat with one or more applications of a topcoating composition containing (a) a polymer product of the invention (b) a curing agent (as described above) reactive with hydroxyl functionality of the polymer product, and (c) optionally a cure promoting catalyst. In a preferred embodiment of the method of the invention, the polymer product is one formed from components comprising (1) from 10 to 40 percent by weight of the saturated monocarboxylic acid, (2) from 5.0 to 25 percent by weight of the polymerizable ethylenically unsaturated epoxy-functional monomer, (3) from 10 to 40 percent by weight of the copolymerizable hydroxyl-functional vinyl monomer, and (4) from 20 to 50 percent by weight of the copolymerizable ethylenically unsaturated monomer different from components (2) and (3); and the curing agent comprises an organic polyisocyanate (examples of which have been described above). The method of the invention also includes the "color plus clear" method in which a polymer product of the invention is utilized for the basecoating composition and a film-forming resin other than a polymer product of the invention is utilized for the clear topcoating composition.

Thus, at least one of the basecoating composition and topcoating composition contains, either as the sole film-forming resin or optionally in combination with an additional film-forming thermoplastic and/or thermosetting resin, a polymer product of the present invention. Examples of such additional film-forming thermoplastic and/or thermosetting resins include the generally known cellulosics, acrylics, aminoplasts, urethanes, polyesters, polyethers, epoxies or mixtures thereof.

Additionally, when only one of the basecoating and topcoating compositions contains a copolymer product of the invention, the other contains a film-forming resin typically selected from the generally known cellulosics, acrylics, aminoplasts, urethanes, polyesters, epoxies or mixtures thereof mentioned immediately above. These film-forming resins can be employed optionally in combination with various ingredients generally known for use in coating compositions containing film-forming resins of these general classes. Examples of these various ingredients include: fillers, plasticizers; antioxidants; mildewcides and fungicides; surfactants; and various flow control agents including, for example, thixotropes and also additives for sag resistance and/or pigment orientation based on polymer microparticles (sometimes referred to as microgels) described for example in U.S. Patents 4,025,474; 4,055,607; 4,075,141; 4,115,472; 4,147,688; 4,180,489; 4,242,384; 4,268,547; 4,220,679; and 4,290,932 the disclosures of which are hereby incorporated by reference.

Pigments suitable for the pigmented basecoating composition include a wide variety of pigments generally known for use in coating compositions. Suitable pigments include both metallic flake pigments and various white and colored pigments examples of which have been described previously herein.

The following examples illustrate the invention and should not be construed as a limitation on the scope thereof. Unless specifically indicated otherwise, all percentages and amounts are understood to be by weight. Wherever used herein "pbw" means parts by weight.

EXAMPLE 1

This example illustrates the preparation of a resinous product (an acrylic polyol) according to the invention.

A reaction vessel equipped with stirrer, thermometer, condenser and addition funnels is charged with 1126.3 g xylene and 505.0 g isostearic acid (available as EMERSOL 875 from Emery Industries, Inc.) and heated to reflux (about 140 degrees Celsius, "°C"). Two feeds, identified herein as "Feed A" and "Feed B", are gradually and simultaneously added to the vessel over a period of two hours while the contents of the vessel are maintained at reflux conditions. Feed A consists of a mixture of 729.8 styrene, 526.8 g hydroxypropyl acrylate, 241.5 g methyl methacrylate and 252.0 g glycidyl methacrylate. Feed B consists of a mixture of 87.5 g 2,2'-azobis(methylbutyronitrile) and 351.5 g xylene. After the addition of the two feeds A and B is complete, the contents of the vessel are allowed to reflux and the acid value is monitored until it reaches less than 4.0 (after about 6 hours). The resulting product is allowed to cool and is thinned with 279.8 g xylene.

The resultant product has a total solids content measured for 1 hour at 110°C of 56.3 percent by weight; has residual contents of methyl methacrylate and styrene of 0.15% and 0.31% by weight, respectively; has an acid value of 3.10 mg KOH/g; has a Gardner-Holdt bubble tube viscosity of T; has a hydroxyl value of 77.7 mg KOH/g; has an epoxy equivalent weight of 17,234; has an APHA color number of 30-40; has a peak molecular weight of 9827, a weight average molecular weight of 11,434 and a number average molecular weight of 5123 as determined by gel permeation chromatography utilizing a polystyrene standard.


EXAMPLE 2


Part (a) of this example illustrates the preparation of a two-package topcoating composition according to the invention. Part (b) of this example illustrates the application, curing, and resultant properties of the topcoating composition of part (a).

(a) The components as set forth in the following Table 1 are mixed together.

### TABLE 1

| Coating Composition Component | Mass (grams) |
|---|---|
| Reaction Product of Example 1 | 127.6 |
| Color Package[1] | 67.4 |
| Thinner[2] | 68.7 |
| Polyisocyanate Hardener[3] | 79.0 |

[1] The Color Package consists of 612.5 pbw butyl acetate, 102.5 pbw cellulose acetate butyrate (available as CAB 551.01 from Eastman Chemical Company), 452.5 pbw xylene, 100.0 pbw butanol, 160.0 pbw aluminum pigment paste (available as 3166 AR Sparkle Silver from Silberline Manufacturing Company), 65.0 pbw butyl CELLOSOLVE Acetate, 67.5 pbw DOWANOL PM acetate, 57.5 pbw of a tin catalyst solution (containing 4.55 pbw dibutyltindilaurate, 228.6 pbw DOWANOL PM Acetate and 224.05 pbw xylene), 15.0 pbw flow control agent (available as BYK 300 from BYK Mallinckrodt Chem. Produkte GmbH), 30.0 pbw ultraviolet light absorber (available as TINUVIN 328 from CIBA-GEIGY), 15.0 pbw of a hindered amine stabilizer (available as TINUVIN 292 from CIBA-GEIGY) and 7.5 g AROMATIC-100 (a mixture of aromatic hydrocarbons available from EXXON Chemical Company U.S.A.).

[2] A mixture of 20.0 parts by volume lactol spirits, 15.0 parts by volume toluene, 10.0 parts by volume butyl acetate, 20.0 parts by volume DOWANOL PM Acetate and 35.0 parts by volume methyl ethyl ketone.

[3] The hardener consists of 358.0 pbw aliphatic polyisocyanate (available as DESMODUR N-3200 from Mobay Chemical Corp.) in 302.48 pbw butyl acetate and 80.16 pbw ethyl acetate.

(b) The topcoating composition of part (a) immediately above is spray applied at ambient atmospheric conditions to gauge cold rolled steel panels which have been treated, primed, sanded and sealed (i.e., treated with BONDERITE 40, primed with a two-package acrylic urethane primer surfacer available as K-200/K-201 from PPG INDUSTRIES, INC., PPG FINISHES, sanded with No. 400 grit paper, and sealed with a two component, epoxy primer available as DP-40/401 from PPG INDUSTRIES, INC., PPG FINISHES) in three double coats with 3 to 5 minute flashes at ambient conditions between coats.

The resultant composite films from the topcoating composition of part (a) are cured and resultant properties are determined, the results being as set forth in the following Table 2. The following terms and abbreviations used in Table 2 have the meanings as set forth below.

"Dust Free" refers to the time in minutes necessary so that a cotton ball placed on the coated panel for 10 seconds falls off the panel when the panel is inverted.

"Tack Time" refers to the period in minutes after which the coating does not feel tacky to the touch.

"DFT" means dry film thickness in mills.

"20° Gloss" means "20 degree gloss" as conventionally measured 24 hours and 8 days, respectively, after application of the topcoating composition to the panel.

"DOI" means "distinctness of image" as conventionally measured 24 hours and 8 days, respectively, after application of the topcoating composition to the panel.

"Sward" refers to Sward Hardness as conventionally measured 24 hours and 8 days, respectively, after application of the topcoating composition to the panel.

"Pencil" refers to Pencil Hardness as conventionally measured 24 hours and 8 days, respectively, after application of the topcoating composition to the panel.

"Gasoline soak" means resistance to deterioration by the composite film to soaking for 3 minutes in gasoline. For gasoline soak a rating of 5 means excellent; a rating of 4 means good; a rating of 3 means fair; a rating of 2 means poor; and a rating of 1 means very poor.

"Adhesion" refers to cross-hatch adhesion of the composite film to the substrate 24 hours and 8 days, respectively, after application determined according to ASTM test method D3359. The values for this test range from 0 to 5. A value of 5 for this test means that there was no adhesion failure (or no "pickoff") of the composite coating in any manner.

"Humidity" refers to humidity resistance determined utilizing a humidity chamber operating at 100 percent relative humidity at 37.8 degrees Celsius. The values in the table are 20 degree gloss readings for the composite coatings before placing them in the humidity chamber (i.e., 0 hours) and after 24 hours in the humidity chamber.

"Adhesion-H" refers to cross-hatch adhesion of the composite film to the substrate after 1 hour and 24 hours, respectively, in the humidity chamber described above, and is determined according to ASTM test method D3359.

"Toluene" refers to the solvent resistance of the coating when 2 drops of toluene are applied to the coating and allowed to evaporate. A rating of 5 means that there was no visible effect (deterioration) on the coating in this test.

TABLE 2

| Composite Film | Tack Time | Dust Free | DFT | 20° Gloss 24 Hr/8 Day | DOI 24 Hr/8 Day | Sward 24 Hr/8 Day |
|---|---|---|---|---|---|---|
| Part (a) | 112 | 85 | 2.4 | 82/77 | */63.5 | 14/16 |

TABLE 2 (Continued)

| Composite Film | Pencil 24 Hr/8 Day | Gasoline 24 Hr/8 Day | Toluene 24 Hr/8 Day | Adhesion 24 Hr/8 Day |
|---|---|---|---|---|
| Part (a) | 3B/B | 5/5 | 5/5 | 5/5 |

TABLE 2 (Continued)

| Composite Film | Humidity 0 Hr/96 Hr | Adhesion-H 1 Hr/24 Hr |
|---|---|---|
| Part (a) | 80/79 | 5/5 |

* Not measured.

## Claims

1. A resinous composition comprising:
(A) from 20 to 100 percent by weight of a polymer product formed from the reaction of components comprising
(1) a saturated monocarboxylic acid,
(2) a polymerizable ethylenically unsaturated epoxy-functional monomer,
(3) optionally a copolymerizable hydroxyl-functional vinyl monomer, and
(4) optionally a copolymerizable ethylenically unsaturated monomer different from said components (2) and (3),
wherein epoxy functionality from said ethylenically unsaturated epoxy-functional monomer has been reacted with carboxyl functionality from said saturated monocarboxylic acid and ethylenic unsaturation from said epoxy-functional monomer and from said optional components (3) and (4) has been addition polymerized in the presence of the polymerization initiator; and
(B) from 80 to 0 percent by weight of an inert organic solvent.

2. The resinous composition of claim 1 wherein said polymer product is formed from said components comprising
(1) from 1.0 to 70 percent by weight of said saturated monocarboxylic acid,
(2) from 1.0 to 50 percent by weight of said polymerizable ethylenically unsaturated epoxy-functional monomer,
(3) from 0 to 40 percent by weight of said copolymerizable hydroxyl-functional vinyl monomer, and
(4) from 0 to 60 percent by weight of said copolymerizable ethylenically unsaturated monomer different from said components (2) and (3).

3. The resinous composition of claim wherein said polymer product is formed from said components comprising from 10 to 40 percent by weight of said hydroxyl-functional vinyl monomer.

4. The resinous composition of claim 3 wherein said polymer product is formed from said components comprising from 20 to 50 percent by weight of said copolymerizable ethylenically unsaturated monomer different from said components (2) and (3).

5. The resinous composition of claim wherein said polymerization initiator comprises a free radical polymerization initiator.

6. The resinous composition of claim 1 wherein said polymer product is formed from the reaction of said components comprising

(1) from 10 to 40 percent by weight of said saturated monocarboxylic acid,

(2) from 5.0 to 25 percent by weight of said polymerizable ethylenically unsaturated epoxy-functional monomer,

(3) from 10 to 40 percent by weight of said copolymerizable hydroxyl-functional vinyl monomer, and

(4) from 20 to 50 percent by weight of said copolymerizable ethylenically unsaturated monomer different from said components (2) and (3).

7. A method of preparing a polymer product suitable for utilization in thermosetting compositions comprising reacting, in an organic solvent medium, components comprising:

(1) a saturated monocarboxylic acid,

(2) a polymerizable ethylenically unsaturated epoxy-functional monomer,

(3) optionally a copolymerizable hydroxyl-functional vinyl monomer, and

(4) optionally a copolymerizable ethylenically unsaturated monomer different from said components (2) and (3),

wherein epoxy functionality from said ethylenically unsaturated epoxy-functional monomer reacts with carboxyl functionality from said saturated monocarboxylic acid and ethylenic unsaturation from said ethylenically unsaturated epoxy-functional monomer and ethylenic unsaturation from said optional components (3) and (4) is addition polymerized in the presence of a polymerization initiator.

8. The method of claim 7 wherein said saturated monocarboxylic acid and said polymerizable ethylenically unsaturated epoxy-functional monomer are first pre-esterified to form a first reaction product, and said first reaction product is thereafter polymerized along with said optional components (3) and (4) in the presence of said polymerization initiator.

9. The method of claim 7 wherein said polymerizable ethylenically unsaturated epoxy-functional monomer is first polymerized along with said optional components (3) and (4) to form an epoxy-functional polymerized product, and thereafter said epoxy-functional polymerized product is esterified with said saturated monocarboxylic acid.

10. The method of claim 7 wherein said ethylenically unsaturated epoxy-functional monomer is polymerized in the presence of said saturated monocarboxylic acid and said optional components (3) and (4).

11. A coating composition containing as binder a polymer product formed from the reaction of components comprising (1) a saturated monocarboxylic acid, (2) a polymerizable ethylenically unsaturated epoxy-functional monomer, (3) optionally a copolymerizable hydroxyl-functional vinyl monomer, and (4) optionally a copolymerizable ethylenically unsaturated monomer different from said components (2) and (3), wherein epoxy functionality from said ethylenically unsaturated epoxy-functional monomer has been reacted with carboxyl functionality from said saturated monocarboxylic acid in said polymer product and wherein ethylenic unsaturation from said ethylenically unsaturated epoxy-functional monomer and from said optional components (3) and (4) has been addition polymerized in the presence of a polymerization initiator.

12. The coating composition of claim 11 wherein said polymer product is formed from said components comprising (1) from 1.0 to 70 percent by weight of said saturated monocarboxylic acid, (2) from 1.0 to 50 percent by weight of said polymerizable ethylenically unsaturated epoxy-functional monomer, (3) from 0 to 40 percent by weight of said copolymerizable hydroxyl-functional vinyl monomer, and (4) from 0 to 60 percent by weight of said copolymerizable ethylenically unsaturated monomer different from said components (2) and (3).

13. The coating composition of claim 12 additionally containing pigment.

14. The coating composition of claim 12 wherein said polymer product is formed from components comprising from 10 to 40 percent by weight of said copolymerizable hydroxyl-functional vinyl monomer.

15. The coating composition of claim wherein said polymer product is formed from components comprising from 20 to 50 percent by weight of said ethylenically unsaturated monomer different from said components (2) and (3).

16. The coating composition of claim 12 wherein said polymerization initiator comprises a free radical polymerization initiator.

17. The coating composition of claim 12 wherein said polymer product is formed from components comprising

(1) from 10 to 40 percent by weight of said saturated monocarboxylic acid,

(2) from 5.0 to 25 percent by weight of said polymerizable ethylenically unsaturated epoxy-functional monomer,

(3) from 10 to 40 percent by weight of said copolymerizable hydroxyl-functional vinyl monomer, and

EP 0 406 854 A2

(4) from 20 to 50 percent by weight of said copolymerizable ethylenically unsaturated monomer different from said components (2) and (3).

18. The coating composition of claim 17 containing a curing agent reactive with hydroxyl functionality of said polymer product.

19. The coating composition of claim wherein said curing agent comprises an organic polyisocyanate.

20. The coating composition of claim 18 wherein said polymer product and said curing agent are in amounts by weight, based on their combined weight in solids, of from 40 to 75 percent and from 25 to 60 percent respectively.

21. The coating composition of claim 20 containing from 20 to 80 percent by weight solids of said polymer product, up to 50 percent by weight of pigment and from 20 to 80 percent by weight of solvent based on the total weight of said coating composition.

22. A method of coating a substrate comprising the steps of:

(A) coating a substrate with one or more applications of a pigmented basecoating composition containing a film-forming resin to form a basecoat; and

(B) coating said basecoat with one or more applications of a topcoating composition containing

(a) a polymer product formed from components comprising (1) from 1.0 to 70 percent by weight of a saturated monocarboxylic acid, (2) from 1.0 to 50 percent by weight of a polymerizable ethylenically unsaturated epoxy-functional monomer, (3) from 0 to 40 percent by weight of a copolymerizable hydroxyl-functional vinyl monomer, and (4) from 0 to 60 percent by weight of a copolymerizable ethylenically unsaturated monomer different from said components (2) and (3), wherein epoxy functionality from said ethylenically unsaturated epoxy-functional monomer has been reacted with carboxyl functionality from said saturated monocarboxylic acid in said polymer product,

(b) a curing agent reactive with hydroxyl functionality of said polymer product, and

(c) optionally an effective amount of a cure promoting catalyst.

23. The method of claim 22 wherein said polymer product is formed from components comprising (1) from 1.0 to 70 percent by weight of said saturated monocarboxylic acid, (2) from 1.0 to 50 percent by weight of said polymerizable ethylenically unsaturated epoxy-functional monomer, (3) from 0 to 40 percent by weight of said copolymerizable hydroxyl-functional vinyl monomer, and (4) from 0 to 60 percent by weight of said polymerizable ethylenically unsaturated monomer different from said components (2) and (3).

24. The method of claim wherein said polymer product is formed from components comprising

(1) from 10 to 40 percent by weight of said saturated monocarboxylic acid,

(2) from 5.0 to 25 percent by weight of said polymerizable ethylenically unsaturated epoxy-functional monomer,

(3) from 10 to 40 percent by weight of said copolymerizable hydroxyl-functional vinyl monomer, and

(4) from 20 to 50 percent by weight of said copolymerizable ethylenically unsaturated monomer different from said components (2) and (3); and

said curing agent comprises an organic polyisocyanate.

25. The method of claim wherein said polymer product and said curing agent are in amounts by weight, based on their combined weight in solids, of from 40 to 75 percent and from 25 to 60 percent respectively.

12